Europäisches Patentamt

European Patent Office

Office européen des brevets

(11) Publication number: **0 341 091**
**A2**

## EUROPEAN PATENT APPLICATION

(21) Application number: **89304634.2**

(51) Int. Cl.4: **C 08 F 210/02**

(22) Date of filing: **08.05.89**

(30) Priority: **06.05.88 US 191295    26.07.88 US 224593**

(43) Date of publication of application:
**08.11.89 Bulletin 89/45**

(84) Designated Contracting States:
**BE DE ES FR GB IT NL SE**

(71) Applicant: **THE DOW CHEMICAL COMPANY**
**2030 Dow Center Abbott Road P.O. Box 1967**
**Midland Michigan 48640-1967 (US)**

(72) Inventor: **Dohrer, Kathryn K.**
**33 Holly Chase**
**Clute Texas 77531 (US)**

**Hazlitt, Lonnie G.**
**524 Wisteria**
**Lake Jackson Texas 77566 (US)**

(74) Representative: **Raynor, John et al**
**W.H. Beck, Greener & Co 7 Stone Buildings Lincoln's Inn**
**London WC2A 3SZ (GB)**

(54) Linear low density polyethylene of ultra low density.

(57) A heat-sealable LLDPE for packaging is prepared by employing conditions, catalyts, and an amount of $C_5$-$C_{12}$ aliphatic alpha-olefin comonomer(s) sufficient to produce a density in the range of 0.87 to 0.918 g/cc whereby a narrow molecular weight copolymer is produced which has a low $I_{10}/I_2$ ratio and a $z_1/z_0$ value which is in the range of 3.5 to 7, along with a numerical value which is not greater than the sum of $(62.4 - 63.7 \cdot \text{density})$, and also exhibiting good heat-seal strength and low concentrations of hexane-extractables. Preferably, the comonomer is at least one straight chain $C_5$-$C_8$, most preferably octene-1. The density is preferably not more than 0.915 g/cc. Due to its strength, good heat-sealability, and low levels of n-hexane extractables, the material is ideally suitable for packaging food, but also has other utility.

EP 0 341 091 A2

Bundesdruckerei Berlin

## Description

## LINEAR LOW DENSITY POLYETHYLENE OF ULTRA LOW DENSITY

Linear low density polyethylene (LLDPE) having certain critical properties at very low densities are disclosed.

This invention arose as a result of preparing novel copolymers of ethylene and octene-1 having low density and narrow molecular weight distribution. Low density was obtained by using high levels of octene-1. Narrow molecular weight distribution can be obtained by using catalysts of the type disclosed in U.S. Patent 4,612,300 (Coleman). Surprisingly the products had low n-hexane extractable content even at low density, and the product had a broad temperature range over which polymer film could be heat sealed, even for products with a narrow molecular weight distribution.

It is known in the art that LLDPE is an acronym for "linear low density polyethylene", even though it is realized that in that expression the word "polyethylene" is a misnomer considering that it is not being used in referring to a honmopolymer of ethylene, but to a copolymer wherein a minor amount of a $C_3$-$C_{16}$ higher alkene-1 has been copolymerized (using a metal coordination catalyst) with a majority amount of ethylene to form a linear copolymer having a lower density than a homopolymer of ethylene made using such a metal coordination catalyst. The density of the polymer, compared to a homopolymer of ethylene made in the same manner, becomes lower in proportion to the amount of, and size of, the alkene-1 which is polymerized with the ethylene. The same type of catalyst is used in making a linear (essentially non-branched) homopolymer of ethylene which is known as "high density polyethylene", the commonly accepted acronym being "HDPE".

The term "linear" is used to distinguish over the branched (i.e. non-linear) low density polymers of ethylene ("LDPE") made using a free-radical catalyst (also known as "initiator") at high pressures. In a linear polymer there are very few, if any, side-chains of polymerized monomer units, the pendent side-groups of the $C_3$-$C_{16}$ alkene-1 on the linear polymer being that part of the alkene which is not in the chain of carbons which comprise the polymer "backbone". Thus, the present invention does not include LDPE and HDPE as well as not including "conventional" LLDPE. The term "conventional" indicates commercially available polymers of the prior art.

This invention relates to a linear low density polyethylene (also called "LLDPE") composition having a unique short chain branching distribution at very low density. In the density region of interest (greater than 0.87 gm/cc and less than 0.918 gm/cc), the resin so-produced has lower n-hexane extractables, while maintaining or improving product performance (such as increased heat-sealing characteristics) as compared to "conventional linear low density copolymer of the same density and comonomer type.

Advances in the technology of the packaging industry have challenged the polyethylene producers to formulate resin designs which meet increasingly more stringent performance requirements. Decreasing the thickness of the packaging material, with no net decrease in performance characteristics, is a goal of the packaging industry. Impact and puncture resistance, tensile strength, tear resistance, shrinkability, lower surface stickiness (also known as tackiness), and optics are properties of concern. In particular, the highly automated packaging systems require good ulitmate heat sealing strength at low temperatures (preferably over a wide range of temperatures), and good "hot tack" strength (the heat sealing condition where the sealed portions of a package are not cooled completely prior to the addition of the contents). Sealing through contaminants is also highly desirable.

It is known that increasing the molecular weight of LLDPE normally results in improved impact strength and puncture resistance properties, heat sealing characteristics (such as ultimate seal strength and hot tack strength), shrinkability, and stress crack resistance. Narrowing the molecular weight distribution normally increases impact strength and puncture resistance properties, and improves optical properties. Furthermore, it is known that for a given comonomer type, lowering the density of the LLDPE normally results in improved impact strength and puncture resistance properties, optical properties, heat sealing characteristics, improved resistance to environmental stress crack (ESCR). At low temperatures shrinkage of oriented films increases with decreasing density. For a given density, alpha-olefins (i.e.,"1-alkenes") of increasing length generally yield improved properties, as described.

However, regulations in some countries provide that n-hexane extractions (50°C) cannot exceed 5.5 percent, by weight, for polyethylene used in articles that contact food which are used for packing food or holding food during cooking. Thus, a means to lower density while maintaining acceptable n-hexane extractable levels is desired.

Temperature rising elution fractionation is a semi-quantitative method describing the short chain branching distribution (SCBD) of copolymers of ethylene and one or more alpha-olefin. L. Wild, et al (J. Polm. Sci., Polymer Phys. Ed., 20, 441 (1982)) have demonstrated the use of the technique on an analytical level. The analysis is based upon the relationship of the incorporation of comonomer into otherwise linear runs of ethylene segments versus the temperature of crystallization, $T_c$, for these segments. (A "run" of ethylene segments is a reference to a portion of the copolymer chain in which there are no side-groups present because there are no alpha-olefin comonomer units polymerized into the chain in that sequence.) Allegedly, having no incorporated comonomer groups will result in homopolymer having the maximum $t_c$ (approximately 100°C for polyethylene in 1,2,4-trichlorobenzene). Incremental introductions of comonomer will reduce the $T_c$ for resulting fractions in a manner consistent with the proportion and distribution of comonomer in the fraction. The Wild technique yields a distribution by weight of polymer as a function of $T_c$.

$T_c$ can be predicted on the basis of copolymer composition using an expression analogous to that of P. J. Flory, et al (Polymer, 4:221 (1963)) as shown below:

$$1/T_c - 1/T_c^\circ \propto (-R/H_u) \cdot \ln P_A.$$

In the above equation, $T_c^\circ$ is the crystallization temperature of homopolymer, R is the gas constant, $H_u$ is the heat of fusion per crystallizable unit, and $P_A$ is the mole fraction of crystallizable units. In practice, the observed depression in $T_c$ is greater than that which is predicted. The value of $P_A$ is the probability, based upon the mole fraction of crystallizable units, that a given sequence of crystallizable units will occur. This probability is reduced by the addition of comonomer.

A new term "z" is defined here, which is analogous (but not equivalent) to the term Zeta described by Flory (ibid, p. 223). This new term will be understood to represent the average number of contiguous crystallizable units multiplied by 1000. It ranges from 1000 for homopolymer of ethylene, to 0 for homopolymer of the alpha-olefin comonomer. The value of z may be determined at a given temperature by isolating a fraction crystallized at its $T_c$, deducing its comonomer mole fraction by determining the corrected methyls/1000 carbon atoms (corrected for chain ends, i.e., molecular weight) in the fraction by using either $^{13}C$ NMR or IR, and calculating the mole fraction of the average sequence length of methylene units as shown below:

$$z = (1 - (x \cdot (m - 1)/1000 + 28/M_n)) \cdot 1000/(x + 1).$$

In the above equation, x is the measured number of corrected methyls/1000 carbon atoms, m is the number of carbon atoms in the comonomer, and $M_n$ is the number average molecular weight of the fraction (determined by gel permeation chromatography, GPC).

The above calculation for each fraction is synonymous to a transformation of the random variable $T_c$ to a new random variable z. The new distribution will reflect the weight fraction of polymer as a function of average crystallizable segment mole fraction. Two moments of this distribution are defined in the following equation:

$$z_0 = (\Sigma w_i \cdot z_i^{-1})^{-1}$$
$$z_1 = \Sigma w_i \cdot z_i.$$

In these equations $w_i$ is the weight percent of the $i^{th}$ fraction and $z_i$ is the value of z calculated from the observed $T_c$ for the $i^{th}$ fraction. The value of $z_0$ will, in general, be weighted by the proportion of the polymer with little or no crystallizable units. The value $z_1$ will be weighted more strongly by the longer runs of ethylene.

The breadth of the segment mole fraction distribution can be represented by the ratio of appropriate moments. For example, if two polymers have equal densities, they should have similar values of $z_1$ and the same overall mole fraction of comonomer, even for different comonomer types. However, the polymer with the lower value of $z_0$ will have the broader distribution, i.e. should have more short runs of ethylene. Therefore, the ratio of $z_1/z_0$ reflects the breadth of the SCBD when polymers have similar values of $z_1$. A LLDPE possessing a low value of $z_1/z_0$ is described as having a "narrow short chain branching distribution".

U.S. Patent 4,612,300 (Coleman) describes a process for producing LLDPE copolymers with narrow molecular weight distribution. The improvements in product performance resulting from a narrower molecular weight distribution are generally known. The region of interest is for melt flow indices of less than 1.5 g/10 min. Using catalyst described in U.S. Patent 4,612,300 and employing the general procedure for polymerization, it was found that the density region investigated is no lower than 0.920 g/cc. Coleman teaches that his invention is especially advantageous in the copolymerization of ethylene and higher alpha-olefins (Column 2, lines 49-51) in order to optimize catalyst yields (Column 10, lines 38-40). Exploring a density range below 0.920 g/cc, the inventors unexpectedly discovered an unusual short-chain branching, SCBD, as reflected in the $z_1/z_0$ ratio. This results in properties important to, e.g., the food packaging industry - important properties such as significantly reducing n-hexane extractable levels and significantly increasing heat sealability for common LLDPE densities. It is further believed that within the density region explored by Coleman, that there is essentially no experimental difference in these same performance properties between LLDPE produced according to U.S. Patent 4,612,300 and LLDPE produced according to other generally known processes in the art. The data in Table I describe the ethylene/octene-1 copolymer produced by using the general polymerization conditions found in U.S. Patent 4,612,300.

TABLE I

EVALUATION OF PRODUCT FROM
U.S. 4,612,300

| $I_2$ (gm/10 min.) | $I_{10}/I_2$ | Density (gm/cc) |
|---|---|---|
| 0.17 | 8.80 | 0.9203 |

The ethylene/octene-1 copolymer was produced in accordance with U.S. patent 4,612,300 using Catalyst Preparation Type F. A stirred 1-gallon (about 3.8 liters) batch reactor containing 2 liters of Isopar E and 300 ml of octene-1 was heated to 195° C. No hydrogen was added. The final reactor pressure was 450 psi. Currently known art (U.S. Patent 4,438,238) teaches away from our invention because it teaches that "...ethylene/alpha-olefin copolymers polymerized with the alpha-olefin concentration increased with an aim to reduce to a large extent the density of copolymers produced such products as those having increased S.C.B. (the number of short chain branches per 1000 carbon atoms) in their lower molecular weight components, thereby having increased solubility in solvents and poor mechanical strengths and causing surface stickiness." In contrast thereto, in our present invention, solubility in solvents unexpectedly remained low as the density was decreased. Mechanical properties improved and surface stickiness did not increase.

In contrast to the aforementioned prior art, a first broad aspect of the invention is a linear low density polyethylene (LLDPE) which comprises a copolymer of ethylene and at least one straight chain aliphatic alpha-olefin comonomer of $C_5$ to $C_{12}$ carbon atoms, said comonomer being present in the copolymer in an amount effective to provide a copolymer density in the range of 0.87 to 0.918 g/cc, wherein said copolymer has a $z_1/z_0$ ratio which is

    (a) in the range of 3.5 to 7, and

    (b) a numerical value which is not greater than the numerical value of $(62.4 - 63.7 \cdot \text{density})$ where density is expressed in g/cc; and said copolymer has an $I_2$ value in the range of 0.1 to 30 gm/10 min. as measured by ASTM D-1238 (190/2.16).

A second aspect of the invention is a packaging material comprising the aforementioned LLDPE, particuarly in the form of a heat sealable film.

A third aspect of the invention is the use of the aforementioned packaging material in packaging food.

Preferably, the copolymers of the present invention have a density of less than 0.915 g/cc (using at least one straight chain $C_5$-$C_8$ comonomer, most especially octene-1), an $I_2$ value in the range of 0.1 to 30 (preferably 0.2 to 10), an $I_{10}/I_2$ ratio of less than 8.5 (more preferably less than 8, most preferably less than 7), a plurality of melting points in the range of 75 to 140°C as measured by DSC, and an $M_w/M_n$ ratio of less than 8.8, preferably less than 7.

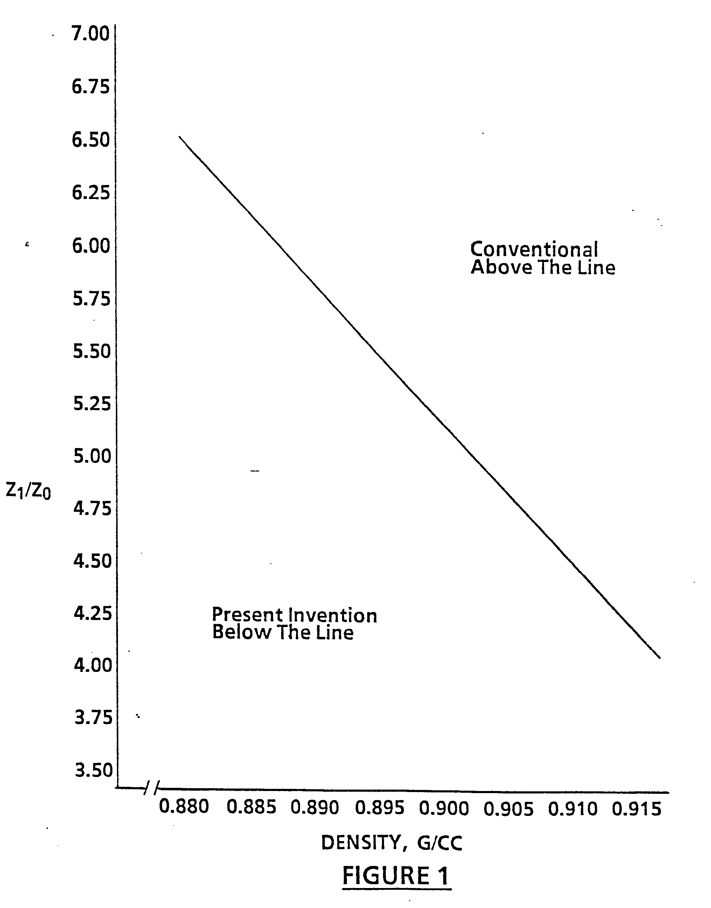

Figure 1 is presented as a visual aid for graphically relating the density and the $z_1/z_0$ ratio, as specified in the present invention. The straight line plotted has an intercept on the y axis of about 62.4 (specifically, 62.439), and a slope of about -63.7 (specifically, -63,716). Hence, points falling below the line have a value of $z_1/z_0$ which is less than the numerical value of $(62.4 - 63.7 \cdot \text{density})$, and thus relate to compositions the subject of the present invention. Similarly, points falling above the line have a value of $z_1/z_0$ which is greater than the value of $62.4 - 63.7 \cdot \text{density}$, and thus relate to compositions outside the present invention.

Throughout this disclosure, "melt flow rate, (MFR)", "melt index (MI)", and "$I_2$" are all measured in accordance with ASTM D-1238(190/2.16). "$I_{10}$" is measured in accordance with ASTM D-1238(190/10). Some practitioners also make measurements using other variations of D-1238, such as (190/21.6), (150/2.16), and (190/10).

The composition of the present invention is as follows:

It is an interpolymer of ethylene containing from 7 to 40 percent by weight (preferably 9 to 35 percent by weight) of at least one higher alpha-olefin of $C_5$-$C_{12}$, preferably at least one straight chain of those in the range of $C_5$-$C_8$, most especially octene-1; these olefins are represented by the formula $H_2C=CH\text{-}R$, where R represents a hydrocarbon moiety containing from 3 to 10 carbon atoms, especially pentene-1, hexene-1, or octene-1, or a mixture of such olefins;

It has a density in range of 0.87 up to 0.918 gm/cc, preferably in the range of 0.87 to 0.915 gm/cc, most preferably 0.88 to 0.915 gm/cc (as measured by ASTM D-1248);

It is critical, in the practice of this invention, that within the above described density range, the LLDPE has a $z_1/z_0$ ratio which is in the range of 3.5 to 7.0 and also has a numerical value of not greater than the numerical value of $62.4 - 63.7 \cdot \text{density}$ (density is measured by ASTM D-1248);

It typically has an $I_2$ in the range of 0.1 to 30, preferably 0.2 to 20, most preferably 0.2 to 10;

It preferably has a narrow molecular weight distribution, by way of having been prepared using a coordination catalyst which produces narrow molecular weight distribution LLDPE, such as described in U.S. Patent 4,612,300; the invention is, however, not limited to only those in accordance with U.S. Patent 4,612,300, but any other catalyst and/or process found to produce a narrow SCBD may be used.

It has the same average comonomer content as conventional LLDPE of similar comonomer type. Analyses of ethylene/alpha-olefin copolymers (Table II) were conducted using a JEOL GX-270 NMR spectrometer and a JEOL GX-400 NMR spectrometer. The carbon-13 magnetic resonance frequency of the GX-270 is 67.8 MHz, and 100 MHz for the GX-400 instrument. Samples were analyzed at 130°C at concentrations of 15 to 40 weight/volume percent in ortho-dichlorobenzene.

The carbon-13 magnetic resonance spectra of the samples were acquired with the following instrument conditions:

Pulse Angle: 90°

Pulse Delay: 20 seconds

Number of scans: 400-1000

Digital Resolution: 0.3 Hz/datapoint

Proton Decoupling: Broad-band complete

LLDPE's may be prepared having the requisite combination of density and SCBD (as measured by $Z_1/Z_0$) by trial and error, varying the reaction conditions under which the LLDPE is prepared, and determining the SCBD by fractionating and measurement of $T_c$ for the resulting compositions.

A number of factors affect the value of $Z_1/Z_0$. For example, increasing the level of comonomer (e.g. octene - 1) incorporation reduces the density and tends to increase the value of $Z_1/Z_0$. In particular, the compositions of the invention may be prepared by utilising a method generally as disclosed in U.S. Patent 4612300, but incorporating increased levels of comonomer.

TABLE II

COMONOMER INCORPORATION (BY C13 NMR)
IN LLDPE

| | Run No. | Density, g/cc | Octene Incorp., wt.% |
|---|---|---|---|
| Conventional LLDPE | 1 | 0.901 | 16.0 |
| | 2 | 0.902 | 18.4 |
| | 3 | 0.905 | 18.4 |
| | 4 | 0.906 | 16.0 |
| | 5 | 0.909 | 16.8 |
| | 6 | 0.910 | 13.6 |
| | 7 | 0.911 | 12.8 |
| | 8 | 0.912 | 13.6 |
| | 9 | 0.917 | 10.4 |
| | 10 | 0.926 | 7.2 |
| | 11 | 0.936 | 3.2 |
| | 12 | 0.942 | 1.6 |
| Example* LLDPE | 13 | 0.894 | 21.6 |
| | 14 | 0.898 | 20.0 |
| | 15 | 0.902 | 16.8 |
| | 16 | 0.903 | 17.6 |
| | 17 | 0.904 | 15.2 |
| | 18 | 0.906 | 15.2 |
| | 19 | 0.908 | 14.4 |
| | 20 | 0.915 | 11.2 |
| | 21 | 0.917 | 11.2 |

*Runs 13-21 are examples of LLDPE of the present invention having the properties of Claim 1 hereinafter. In contrast none of the conventional LLDPE had properties of Claim 1 hereinafter. Runs 13 to 21 essentially involved the use of conditions as shown in Table I except for adjustment of the amount of octene-1 as comonomer.

Observed chemical shifts were referenced to the repeat backbone methylenes with this set at 30 ppm. The integrated peak values of the branchpoint methine, the methylenes alpha to the branchpoint, and the total peak areas were used to determine the number of branches per 1000 carbons.

The following examples illustrate some particular embodiments of the present invention, but the invention is not limited to the particular embodiments shown.

EXAMPLE 1 compares prior art LLDPE (Runs A-F) values of $z_1/z_0$, density, and n-hexane extractables for ethylene/octene-1 copolymers with melt indices of about $1 \pm 0.3$ g/10 min. with present invention of LLDPE (Runs G-L) in Table IIIA. LLDPE with melt indices of $6 \pm 0.2$ g/10 min. are shown in Table IIIB to compare prior art (Runs M-O) to the present invention.

TABLE IIIA

ETHYLENE/OCTENE-1 COPOLYMERS $I_2 = 1 \pm 0.3$ G/10 MIN.

| Conv. LLDPE | $I_2$, g/10 min. | $I_{10}/I_2$ | Density, g/cc | $z_0$ | $z_1$ | $z_1/z_0$ | Hex Ext.s, wt.% | $M_w \times 10^{-3}$ | $M_n \times 10^{-3}$ | $M_w/M_n$ |
|---|---|---|---|---|---|---|---|---|---|---|
| A | 0.8 | 9.9 | 0.903 | 32.7 | 202.5 | 6.19 | 5.8 | 126 | 23.0 | 5.5 |
| B | 0.8 | 8.2 | 0.906 | 38.9 | 215.3 | 5.53 | 3.7 | 131 | 20.4 | 6.4 |
| C | 0.9 | 10.6 | 0.906 | 35.8 | 202.4 | 5.65 | 4.0 | 137 | 21.6 | 6.3 |
| D | 1.2 | 8.6 | 0.908 | 37.9 | 223.9 | 5.91 | 3.7 | 113 | 21.3 | 5.3 |
| E | 0.8 | 8.2 | 0.910 | 43.5 | 214.4 | 4.93 | 1.7 | 126 | 20.7 | 6.1 |
| F | 0.9 | 10.2 | 0.911 | 42.5 | 223.5 | 5.26 | 2.1 | 129 | 21.4 | 6.0 |
| LLDPE* | | | | | | | | | | |
| G | 0.7 | 7.6 | 0.902 | 36.3 | 166.2 | 4.58 | 3.9 | 126 | 21.2 | 5.9 |
| H | 0.7 | 7.7 | 0.903 | 35.8 | 164.3 | 4.59 | 4.1 | 132 | 22.9 | 5.8 |
| I | 0.7 | 7.7 | 0.906 | 38.3 | 173.6 | 4.53 | 2.4 | 133 | 23.4 | 5.7 |
| J | 0.7 | 7.5 | 0.908 | 43.2 | 184.8 | 4.28 | 1.7 | 133 | 22.9 | 5.5 |
| K | 0.9 | 7.3 | 0.912 | 51.8 | 223.2 | 4.31 | 1.1 | 128 | 24.1 | 5.3 |
| L | 1.1 | 7.0 | 0.913 | 69.4 | 243.6 | 3.51 | 0.5 | 101 | 21.7 | 4.7 |

*LLDPE of the present invention to compare with conventional LLDPE.

EP 0 341 091 A2

ETHYLENE/OCTENE-1 COPOLYMERS $I_2$ = about $6 \pm 0.2$ G/CC

| Conv. LLDPE | $I_2$, g/10 min. | $I_{10}/I_2$ | Density, g/cc | $z_0$ | $z_1$ | $z_1/z_0$ | Hexane Extractables, wt.% | $M_w$ x10$^{-3}$ | $M_n$ x10$^{-3}$ | $M_w/M_n$ |
|---|---|---|---|---|---|---|---|---|---|---|
| M | 6.2 | 9.3 | 0.906 | 30.5 | 171.7 | 5.63 | 11.2 | 71.0 | 12.9 | 5.5 |
| N | 6.0 | 8.1 | 0.914 | 37.5 | 215.4 | 5.74 | 4.3 | 77.0 | 13.6 | 5.7 |
| O | 5.8 | 7.5 | 0.920 | 53.1 | 275.5 | 5.19 | | 65.1 | 13.5 | 4.8 |
| LLDPE* | | | | | | | | | | |
| P | 5.9 | 7.9 | 0.911 | 32.3 | 137.5 | 4.30 | 4.8 | 74.7 | 13.3 | 5.6 |

*LLDPE of the present invention to compare with conventional LLDPE.

EP 0 341 091 A2

Hexane extractables were obtained according to the U.S. FDA procedure 21 CFR 177.1520(a)(3)(ii), in which a sample is extracted at 50°C in n-hexane (commercial grade) for 2 hours. The filtrate is evaporated and the total residue weighed as a measure of the solvent extractable fraction. A sample size of 2.5 gm, 4 mils gauge (0.102 mm), is extracted in 1 liter of solvent.

For a given density, the hexane extractables of the copolymers of the invention are lower than those of conventional LLDPE. The comparison of Example LLDPE P and prior art LLDPE M, both with similar $I_2$ values, shows that in addition to greater heat-seal strength (see Table IV), Example P has 4.8 percent n-hexane extractables and prior art M has 11.2 percent n-hexane extractables. Thus, the resin of the present invention has greater utility, being in compliance with the FDA Regulation CFR 177.1520 in the United States.

The LLDPE of the present invention possesses lower ratios of $z_1/z_0$ than does conventional LLDPE at a given density.

The films listed in Examples 2-4 were fabricated via the tubular blown film extrusion process. It will be appreciated by practitioners of the art of film fabrication that the exact values describing performance, such as found in Tables IV-VI, which one can attain with one type of extruder will not necessarily be the same as those which one may attain with another extruder. For purposes of making useful comparisons of results, one should use the same extruder and similar fabrication conditions, such as temperatures and screw rpm, with all the samples being tested. Likewise, the results obtained by extrusion using the tubular blown film process will not necessarily be the same as those obtained by the cast extrusion process. However, the trends will remain the same.

Heat seal data for EXAMPLE 2 (Table IV) were obtained with a Dynaweb HS103 heat sealer with both jaws heated. Flat sealing platens were used which measured 0.25 inches (6.35 mm) in width for the top and 0.375 inches in width for the bottom platen. Film gauges were 1.5 mils (0.038 mm). The seals were made on one-inch (25.4 mm) wide strips. The strips were cut in the machine direction and the seals were made in the cross direction. The film strips were sealed between Mylar* films which had been sprayed on their internal surfaces with fluoropolymer mold release spray to pre-vent the LLDPE films from sticking to the Mylar* films. Mylar* polymer film is used to prevent the LLDPE from sticking to the sealing bars. (Mylar* is a DuPont trademark for polyethylene terephthalate.) A dwell pressure of 40 psi (2810 g/cm$^2$) was used for all samples. Dwell time for each sample was 0.5 seconds. Temperatures ranged from 190 to 230°F (about 88 to 110°C), being tested in 10°F (5.5°C) increments. The sealed films were pealed apart using an Instron tensiometer at a rate of 5 inches/minute (127 mm/minute). The force, in pounds, required to separate the two layers of LLDPE was recorded. It will be appreciated by the practitioners of this art that the exact seal strength is dependent upon the film thickness, the dwell time, and the pressure.

TABLE IV

HEAT-SEAL DATA FOR ETHYLENE/OCTENE-1 COPOLYMERS

| | Seal Strength (Pounds/inch)[b] | | | | |
|---|---|---|---|---|---|
| | 1 | 2 | 3 | 4 | 5 |
| Temperature, °F | 190 | 200 | 210 | 220 | 230 |
| Temperature, °C | 88 | 93 | 99 | 104 | 110 |
| Example LLDPE P | 0.12 | 0.59 | 1.55 | FF[a] | |
| Conventional LLDPE M | 0.21 | 0.75 | 1.17 | 1.69 | FF |
| Conventional LLDPE N | 0.10 | 0.20 | 0.55 | 1.71 | 2.08 |
| Conventional LLDPE O | 0.03 | 0.08 | 0.13 | 0.61 | 1.85 |

[a]FF - Film failed before the seal.
[b] 0.10 pound/inch equals 17.51268 newton/meter(N/m)

For a given density copolymer (of same comonomer type), the seal (at a given sealing temperature) of film produced from LLDPE described in the present invention is greater than the seal of film produced from conventional LLDPE. Remarkably, the seal of the film from the resin of the invention is greater than that of conventional LLDPE which has an even lower density.

EXAMPLE 3. Hot tack testing was performed on a Packforst Hot Tack Tester over a temperature range of 200 to 250°F in 10°F increments (93 to 121°C in 5.5°C increments). The seal made by the machine was 5 mm wide. The sealing conditions were dwell time of 0.5 seconds, seal pressure of 40 psi, 0.2 second delay time, and a peel speed of 150 mm/second. The film strips were 1-inch (25.4mm) wide. The film gauge was 1.0 mil (0.0254 mm). The force to break the seal was reported in Newtons per inch (25.4mm) of sample width. Four to six tests were done with each sample at each temperature increment. with the average being reported. (Table

8

V) It will again be appreciated by the practitioners of this art that the exact seal strength is dependent upon the film thickness, the dwell time, and the pressure. In Table V below LLDPE I and LLDPE B are the same as those in Table IIIA above.

TABLE V

HOT TACK DATA FOR ETHYLENE/OCTENE-1 COPOLYMERS

Seal Strength (Newtons/in)

| | 1 | 2 | 3 | 4 | 5 | 6 |
|---|---|---|---|---|---|---|
| Temperature, °F | 200 | 210 | 220 | 230 | 240 | 250 |
| Temperature, °C | 93 | 99 | 104 | 110 | 116 | 121 |
| Example LLDPE I | 2.9 | 3.3 | 5.5 | 5.4 | 5.6 | 4.5 |
| Conventional LLDPE B | 0.5 | 1.4 | 1.5 | 3.5 | 3.3 | nd[a] |

[a]nd means not determined

Hot tack seals from film fabricated from LLDPE of the invention are greater than the hot tack seals from conventional LLDPE, of equivalent comonomer type and equivalent density. Equally important is the broader range of sealing temperatures of the LLDPE of the invention which provide a good seal.

Blown films for Example 4 (Table VI) were fabricated on a 2-inch, 24:1 length/diameter Egan extruder using a 3-inch spiral mandrel Egan die with a 30 mil (0.75 mm) die gap. The Egan screw had a Maddock mixing section. Fabrication conditions were maintained at 235°C melt temperature, 1.2 mils (0.03 mm), 2.5:1 blow-up ratio, and a production rate of 4.2 pounds/hour-inch of die circumference.

The dart impact strength, and ultimate tensile strengths of the film fabricated from LLDPE of the invention are greater than the dart impact strength and ultimate tensile strengths of the conventional ULDPE, of equivalent comonomer type and similar density. The optical properties of the improved ULDPE are superior to those of the conventional ULDPE, as evidenced by greater clarity, greater 45 degree gloss, and lower haze.

TABLE VI

Blown Film Comparison of Improved and
Conventional ULDPE (1.2 mils)

|  | Improved K | Conventional F |
|---|---|---|
| Dart Impact[a], g | 750 | 430 |
| Ultimate Tensile[b] MD, psi | 8070 | 7670 |
| CD, psi | 8510 | 7300 |
| Yield[b] MD[g], psi | 1190 | 1240 |
| CD[h], psi | 1140 | 1240 |
| Elongation[b], MD, % | 630 | 680 |
| CD, % | 730 | 780 |
| Toughness[b] MD, ft-lb/in³ | 1420 | 1550 |
| CD, ft-lb/in³ | 1650 | 1630 |
| Clarity[c], % | 49.7 | 32.6 |
| 45 Degree Gloss[d] | 83.8 | 64.2 |
| Haze[e], % | 4.2 | 7.7 |
| Elmendorf Tear[f] MD, g | 490 | 460 |
| CD, g | 540 | 550 |
| 2% Secant Modulus[b] MD, psi x 10⁻³ | 18.3 | 19.8 |
| CD, psi x 10⁻³ | 18.5 | 22.2 |

[a] ASTM D-1709, Method B
[b] ASTM D-882
[c] ASTM D-1746
[d] ASTM D-2457
[e] ASTM D-1003
[f] ASTM D-1922
[g] Machine direction
[h] Cross direction

It is recognized that varying fabrication conditions and/or equipment will produce different results, but the trends will remain the same.

## Claims

1. A linear low density polyethylene (LLDPE) which comprises a copolymer of ethylene and at least one straight chain aliphatic alpha-olefin comonomer of $C_5$ to $C_{12}$ carbon atoms, said comonomer being present in the copolymer in an amount effective to provide a copolymer density in the range of 0.87 to 0.918 g/cc, wherein
said copolymer has a $z_1/z_0$ ratio which is
(a) in the range of 3.5 to 7, and
(b) a numerical value which is not greater than the numerical value of $(62.4-63.7 \cdot density)$ where density is expressed in g/cc;
and said copolymer has an $I_2$ value in the range of 0.1 to 30 gm/10 min. as measured by ASTM D-1238 (190/2.16).

2. The LLDPE of Claim 1 wherein the alpha-olefin comonomer is octene-1.

3. The LLDPE of Claim 1 or claim 2, having a density of from 0.87 to 0.915 g/cc.

4. The LLDPE of any one of the preceding Claims wherein the $I_2$ value is from 0.2 to 10 gm/10 min.

5. The LLDPE of any one of the preceding Claims wherein the LLDPE has an $I_{10}/I_2$ ratio of less than 8.5.

6. The LLDPE of Claim 5 wherein the LLDPE has an $I_{10}/I_2$ ratio of less than 8.0.

7. The LLDPE of any one of the preceding Claims wherein the LLDPE has been prepared by employing in the polymerization a catalyst which produces a molecular weight distribution having a $M_W/M_N$ ratio of less than 8.8.

8. The LLDPE of any one of the preceding Claims wherein the LLDPE has a $M_W/M_N$ ratio of less than 7.

9. The LLDPE of Claim 8 wherein the LLDPE has an $I_2$ value of from 0.2 to 10 gm/10 min., and an $I_{10}/I_2$ ratio of less than 8.

10. The LLDPE of any one of the preceding Claims wherein the LLDPE has a plurality of melting points in the range of 75° to 140°C and less than 5.5 weight percent n-hexane extractables at 50°C.

11. A packaging material comprising an LLDPE as claimed in any one of the preceding Claims.

12. A material as claimed in Claim 11, in the form of a heat sealable film.

13. The use of a material as claimed in Claim 11 or Claim 12 in the packaging of food.

14. A method of preparing an LLDPE having less than 5.5. weight percent n-hexane extractables at 50°C, which method comprises copolymerising ethylene and at least one straight chain alpha-olefin comonomer, under conditions such as to obtain a copolymer having a density of from 0.87 to 0.918g/cc, a ratio of $Z_1/Z_0$ which is:-

(a) from 3.5 to 7, and

(b) not greater than the numerical value of 62.4 - 63.7.density, where density is expressed in g/cc, and an $I_2$ value of from 0.1 to 30 gm/10 min., as measured by ASTMD - 1238 (190/2.16).

## FIGURE 1